(19) Europäisches Patentamt
European Patent Office
Office européen des brevets

(11) Veröffentlichungsnummer: **0 090 241**
**B1**

# (12) EUROPÄISCHE PATENTSCHRIFT

(45) Veröffentlichungstag der Patentschrift: **19.06.85**

(51) Int. Cl.⁴: **C 09 C 1/24**, C 09 C 1/22, C 09 C 3/06

(21) Anmeldenummer: **83102480.7**

(22) Anmeldetag: **14.03.83**

## (54) Thermostabile Eisenoxidpigmente.

(30) Priorität: **27.03.82 DE 3211327**

(43) Veröffentlichungstag der Anmeldung:
**05.10.83 Patentblatt 83/40**

(45) Bekanntmachung des Hinweises auf die Patenterteilung:
**19.06.85 Patentblatt 85/25**

(84) Benannte Vertragsstaaten:
**BE DE FR GB IT NL**

(56) Entgegenhaltungen:
**DE - A - 2 442 831**
**US - A - 2 357 721**
**US - A - 4 145 229**

**WORLD SURFACE COATINGS ABSTRACTS, Band 54, Nr. 463, Januar 1981, Seite 4, Zusammenfassung Nr. 0017, Old Woking, Surrey, GB.**

(73) Patentinhaber: **BAYER AG, Konzernverwaltung RP Patentabteilung, D-5090 Leverkusen 1 Bayerwerk (DE)**

(72) Erfinder: **Biermann, Hans-Peter, Dr., Bethelstrasse 52, D-4150 Krefeld 1 (DE)**
Erfinder: **Köhler, Peter, Dr., Bethelstrasse 10, D-4150 Krefeld 1 (DE)**
Erfinder: **Heine, Heinrich, Dr., Bärenstrasse 13, D-4150 Krefeld 1 (DE)**

**EP 0 090 241 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft Eisenoxidpigmente mit einem Eisen-(II)-Gehalt von mindestens 5 Gew.-% mit einer borhaltigen Beschichtung zur Erhöhung der Stabilität gegenüber Luftoxidation, Verfahren zur Herstellung dieser Pigmente sowie deren Verwendung.

Eisenoxidpigmente, welche Eisen in der Oxidationsstufe +2 enthalten, stellen im Vergleich zum Eisen-(III)-oxid $Fe_2O_3$ thermodynamisch instabile Phasen dar. Sie können in Gegenwart von Luft bzw. Sauerstoff partiell oder vollständig oxidiert werden, z. B.

$$2\,Fe_3O_4 + {}^1/_2\,O_2 \rightarrow 3\,Fe_2O_3 \qquad (1)$$

Solche Reaktionen sind beispielsweise bei Eisenoxidschwarz-Pigmenten bekannt, die in ihrer Zusammensetzung und in ihrer Struktur dem Magnetit entsprechen. Das Pigment büßt durch die Oxidation seine wichtigste Eigenschaft, nämlich die Farbe, ein und wird somit unbrauchbar. Die Oxidationsneigung nimmt verständlicherweise in dem Maße zu wie die Feinteiligkeit und somit die spezifische Oberfläche der Pigmente.

Das gleiche gilt auch für Mischungen von Eisenoxidschwarz mit anderen Eisenoxid-Farbpigmenten — Eisenoxidrot bzw. Eisenoxidgelb —, wie sie für braune Farbtöne hergestellt werden.

Ist es bei den Farbpigmenten der Verlust der coloristischen Eigenschaften, der sie unbrauchbar macht, so ist es bei den Eisen-(II)-haltigen Magnetpigmenten der Verlust der magnetischen Eigenschaften, der gleichfalls durch die Oxidation hervorgerufen wird. Gefährdet sind vor allem feinteilige Magnetitpigmente sowie Mischphasen zwischen Magnetit ($Fe_3O_4$) und Maghämit ($\gamma$-$Fe_2O_3$) mit hohem Eisen-(II)-Gehalt. Oxidationsempfindlich sind aber auch Mischphasen von Magnetit mit Maghämit und/oder Ferriten wie z. B. Cobaltferrit und solche Magnetpigmente, die aus einem Kern aus $Fe_3O_4$ oder einem Eisenoxid mit einem Oxidationszustand zwischen $Fe_3O_4$ und $\gamma$-$Fe_2O_3$ und einer diesen Kern umgebenden Hülle aus magnetischen Metalloxiden — insbesondere des Eisens und des Cobalts — zusammengesetzt sind. In der Fachliteratur findet man neben der Bezeichnung »Mischphase« auch den Ausdruck »Berthollide« für die hier beschriebenen Zusammensetzungen.

Man hat bereits versucht, die Oxidationsempfindlichkeit feinteiliger ferrimagnetischer Magnetitpigmente durch Behandlung mit heterocyclischen organischen Verbindungen zu vermindern (DE-OS 2 744 598). Die Behandlung hat gegenüber den unbehandelten Pigmenten eine erhebliche Verbesserung gebracht, die aber über ein bestimmtes Niveau hinaus nicht zu steigern war. Die eingesetzten Heterocyclen werden zudem nur physikalisch am Pigment adsorbiert und gehen daher weitgehend in die wasserlöslichen Bestandteile ein. Hieraus können Unverträglichkeiten in unterschiedlichen Bindemittelsystemen resultieren.

Aus der DE-OS 2 743 298 sind im wesentlichen aus Eisen bestehende Metallteilchen bekannt, die Bor in der Form von Borat an der Oberfläche enthalten. Die EP-PS 3100 beschreibt ein ferrimagnetisches Eisenoxid, welches zum Schutz gegen Versinterung während der Konvertierung neben anderen Elementen auch Bor enthalten kann.

Diesen Patentschriften kann aber kein Hinweis auf eine Thermostabilisierung von Eisen-(II)-haltigen Eisenoxidpigmenten entnommen werden.

Aufgabe der vorliegenden Erfindung ist es somit, einen Weg zu finden, die thermische Stabilität Eisen-(II)-haltiger Eisenoxidpigmente in Gegenwart von Luft oder anderen Sauerstoff enthaltenden Gasen bzw. Sauerstoff selbst wirksam zu verbessern. Dabei sollen die Pigmente weniger wasserlösliche Bestandteile enthalten und auch die übrigen Nachteile der dem Stand der Technik angehörenden Pigmente nicht aufweisen.

Überraschenderweise wurde nun gefunden, daß Pigmente mit einer Umhüllung aus Borverbindungen diese Anforderungen in hervorragender Weise erfüllen.

Gegenstand der vorliegenden Erfindung sind Eisenoxidpigmente mit einem Eisen-(II)-Gehalt von mindestens 5 Gew.-%, gerechnet als FeO, mit einer Beschichtung zur Erhöhung der Stabilität gegenüber Luftoxidation versehen aus mindestens einer borhaltigen Verbindung.

Bevorzugt besteht dabei die Beschichtung aus 0,1 bis 4 Gew.-% Bor, gerechnet als $B_2O_3$, in Form von Borsauerstoffverbindungen.

Die erfindungsgemäßen Pigmente sind beständiger gegen Oxidation als die Pigmente des Standes der Technik und weisen gleichzeitig deren Nachteile nicht auf.

Zur Bestimmung der Thermostabilität wird folgender Test verwendet:

Eine Probe des zu prüfenden Pigments wird zu einer Pulvertablette von ca. 4 cm Durchmesser bei einem Druck von ca. 20 bar während 20 Sekunden verpreßt. Der so erhaltene Preßling wird bei vorgewählter konstanter Temperatur eine Stunde lang der Luft ausgesetzt. An der so getemperten Probe wird an einer Stirnfläche mit einem Filter-Spektralphotometer (ELREPHO) in Remission mit dem $R_x$-Filter der Rot-Farbanteil bestimmt. Die Differenz der $R_x$-Werte einer getemperten und einer ungetemperten Probe ($\Delta R_x$) ist ein Maß für den Anteil des während der Temperbehandlung durch Oxidation gebildeten Eisen-(III)-oxids $Fe_2O_3$. Als Maßzahl für die Thermostabilität des Pigments wird diejenige Temperatur definiert, bei der eine Probe getempert wurde, deren Wert $\Delta R_x = 1{,}0$ gegenüber der ungetemperten Probe beträgt.

Die den Beispielen beigefügte Fig. 1 verdeutlicht die Abhängigkeit des $\Delta R_x$-Wertes von der Temperatur, bei der jeweils die Temperbehandlung durchgeführt wurde.

Bei den zu stabilisierenden Eisenoxidpigmenten mit einem Eisen-(II)-Gehalt kann es sich um Farbpigmente wie Eisenoxidschwarz und Eisenoxidbraun handeln, es können aber auch magnetische Pigmente wie Magnetit oder Mischphasen von Magnetit mit Maghämit (Berthollide-Eisenoxide) und/oder Ferriten oder mit magnetischen Metalloxiden umhüllte Magnetite bzw. Eisenoxide mit einem Oxidationszustand zwischen Magnetit und Mahämit sein.

Die Herstellung solcher Pigmente ist in der Literatur beschrieben und durch viele Verfahren zugänglich. Eisenoxidschwarz-Pigmente werden im technischen Maßstab hauptsächlich nach zwei Verfahren hergestellt (Ullmanns Encyklopädie der technischen Chemie, 4. Aufl., Bd. 18, S. 603, Verlag Chemie GmbH, Weinheim, 1979): dem Fällungsverfahren, bei dem Eisen(II)salzlösungen unter Einleiten von Luft bei ca. 90°C in der Nähe des Neutralpunktes mit Alkalien ausgefällt werden, bis ein Fe(III)/Fe(II)-Verhältnis von etwa 2 erreicht ist, und dem Anilinverfahren, bei dem Nitrobenzol mit metallischem Eisen zu Anilin reduziert wird und welches so gesteuert werden kann, daß farbstarke Eisenoxidschwarz-Pigmente entstehen.

Je nach Herstellungsverfahren und Reinheit der verwendeten Rohstoffe können Eisenoxidschwarzpigmente in wechselnden Mengen, gewöhnlich bis zu 5 Gew.-%, Nebenbestandteile wie z. B. $SiO_2$ oder $Al_2O_3$ enthalten. Normalerweise ist auch das Fe(III)/Fe(II)-Verhältnis in den Verkaufsprodukten, abweichend vom theoretischen Zahlenwert, größer als 2 und liegt in der Regel zwischen 2,3 und 3,0. Eisen-(II)-haltige Eisenoxidbraun-Pigmente werden zum weitaus größten Teil durch Mischen von Eisenoxidgelb und/oder Eisenoxidrot mit Eisenoxidschwarz hergestellt (Ullmanns Encyklopädie der technischen Chemie, wie oben). Zur Herstellung Eisen(II)-haltiger Eisenoxid-Magnetpigmente (Ullmanns Encyklopädie der technischen Chemie, 4. Aufl., Bd. 18, S. 643, Verlag Chemie GmbH, Weinheim, 1979) geht man meist von $\alpha$-FeOOH oder $\gamma$-FeOOH aus, trocknet, entwässert und reduziert bei 350—600°C mit Wasserstoff zum $Fe_3O_4$. Mischphasen aus Magnetit und Maghämit (Berthollide) können durch partielle Oxidation der Magnetitpigmente unter schonenden Bedingungen erhalten werden. Mischphasenpigmente (Berthollide) von Magnetit mit Maghämit und/oder Ferriten werden üblicherweise hergestellt, indem man Ferrite bildende Metalle, wie z. B. Zn, Mn, Co. Ni, Ca, Mg, Ba, Cu oder Ce, als Oxide bzw. Hydroxide bei der Herstellung der FeOOH-Vorprodukte mitfällt bzw. auf fertige FeOOH-Pigmente aufbringt und diese konvertiert. Auch diejenigen speziellen Magnetpigmente, die durch Aufbringen einer Beschichtung aus magnetischen Metalloxiden — insbesondere des Eisens und des Cobalts — auf einem Kern aus $Fe_3O_4$ oder einem Eisenoxid mit einem Oxidationszustand zwischen $Fe_3O_4$j und $\gamma$-$Fe_2O_3$ hergestellt werden (z. B. epitaxiale Umhüllung, DE-AS 2 235 383, DE-OS 2 817 410), können geschützt werden. Die Anwendung der erfindungsgemäßen Verfahren wird durch die bekannten, bei der Herstellung magnetischer Pigmente üblichen Maßnahmen gegen Versinterungen sowie Nachbehandlungen und Dotierungen nicht beeinträchtigt.

Gegenstand der vorliegenden Erfindung sind weiterhin Verfahren zur Herstellung der erfindungsgemäßen Eisenoxidpigmente. So kann man in an sich bekannter Weise hergestellte Eisen(II)-haltige Eisenoxidpigmente mit mindestens einer Borverbindung mischen, die erhaltene Mischung gegebenenfalls mahlen und gegebenenfalls abschließend tempern. Es ist auch möglich, daß in an sich bekannter Weise hergestellte Eisen(II)-haltige Eisenoxidpigmente in Suspension mit mindestens einer Borverbindung behandelt, getrocknet, gegebenenfalls gemahlen und gegebenenfalls abschließend getempert werden.

Die zu stabilisierenden Eisenoxidpigmente werden mit jenen Borverbindungen gemischt bzw. behandelt, die entweder bereits Bor-Sauerstoffverbindungen darstellen oder aber unter den angewandten Bedingungen in der Lage sind, solche zu bilden. Zur ersten Gruppe gehören beispielsweise ortho-Borsäure, tetra-Borsäure, meta-Borsäure, glasiges Dibortrioxid, kristallines Dibortrioxid, Borsäuretrimethylester, Borsäuretriethylester, Komplexe von Borsäuren mit Polyhydroxyverbindungen und Salze von Borsäuren, wie z. B. $NH_4B_5O_8 \cdot 4\,H_2O$, $Na_2B_4O_6 \cdot 10\,H_2O$, $CaB_3O_5OH \cdot 2\,H_2O$ oder $NaBO_2$. Zur zweiten Gruppe gehören u. a. Bor/Stickstoff-Verbindungen, wie Tris(dimethylamino)boran oder Borazin oder Bor-Schwefelverbindungen wie Dibortrisulfid oder Thioborsäureester. Bevorzugt werden als Borverbindungen Boroxide, Borsäuren und/oder Salze von Borsäuren, besonders bevorzugt ortho-Borsäure und/oder Dibortrioxid eingesetzt.

Die Menge der zuzusetzenden Borverbindung und/oder Borverbindungen richtet sich nach der Art der vorgegebenen Eisenoxidpigmente. Bei den üblichen Eisenoxidschwarz-Pigmenten mit Eisen(II)-Gehalten zwischen 20 und 28 Gew.-%, gerechnet als FeO, und spezifischen Oberflächen zwischen 12 und 18 $m^2/g$, gemessen mit Hilfe der Stickstoff-Adsorptionsmethode nach BET, reicht es in der Regel aus, soviel Borverbindung(en) zuzusetzen, daß der Gehalt an Bor im behandelten Pigment 0,5 bis 2 Gew.-%, gerechnet als $B_2O_3$, beträgt. Die zur magnetischen Signalspeicherung verwendeten Pigmente sind feinteiliger als die Eisenoxidschwarz-Pigmente (BET-Oberflächen größer als 18 $m^2/g$) und erfordern bei gleich hohen Eisen(II)-Gehalten entsprechend ihrer spezifischen Oberfläche, die ohne weiteres 40 $m^2/g$ überschreiten kann, größere Zusatzmengen. Ist der Eisen(II)-Gehalt niedriger, wie es beispielsweise bei den oben beschriebenen, mit magnetischen Metalloxiden umhüllten Eisenoxid-Magnetpigmenten der Fall sein kann, so kann die Zusatzmenge entsprechend vermindert werden. Die im jeweiligen Einzelfall zur Erreichung der gewünschten Thermostabilität notwendige Behandlungsmenge ist im übrigen für den Fachmann mit Hilfe einfacher Testversuche ohne Schwierigkeiten feststellbar.

Nach dem einen erfindungsgemäßen Verfahren werden die in an sich bekannterweise hergestellten Eisen(II)-haltigen Eisenoxidpigmente mit einer oder mehreren Borverbindungen gemischt. Feste Borverbindungen werden zweckmäßigerweise zuvor in einen feinteiligen Zustand gebracht. Sie können aber auch in Form einer Lösung oder Suspension in wäßrigem und/oder organischem Medium zugemischt werden. Zum Mischen können gängige technische Apparate verwendet werden, wie z. B. pneumatisch arbeitende Mischer, Schaufelmischer, Schneckenmischer, Trommelmischer oder Konusmischer. Die Mischung kann bei Raumtemperatur oder aber auch bei höheren Temperaturen als Raumtemperatur erfolgen. Man wird im allgemeinen in Gegenwart von Luft arbeiten, jedoch empfiehlt sich insbesondere bei Anwendung höherer Temperaturen die Verwendung von Inertgasen, wie z. B. Stickstoff. Werden nur kleine Mengen der Borverbindungen mit großen Mengen Pigment vermischt, so kann eine Vormischung vorteilhaft sein. Die erhaltene Mischung wird dann gegebenenfalls gemahlen. Hierzu sind Mahlaggregate unterschiedlichster Bauart geeignet, z. B. Walzenstühle, Kollergänge, Pendelmühlen, Hammermühlen, Stiftmühlen, Turbomühlen, Kugelmühlen oder Strahlmühlen. Die Mahlung kann bei Raumtemperatur oder höheren Temperaturen als Raumtemperatur, gegebenenfalls unter Inertgasen, wie z. B. Stickstoff, durchgeführt werden. Gegebenenfalls wird abschließend bei Temperaturen bis zu 500° C in inerter oder nur geringe Mengen Sauerstoff enthaltender Atmosphäre getempert.

Nach dem anderen erfindungsgemäßen Verfahren werden die in an sich bekannter Weise hergestellten Eisen(II)-haltigen Eisenoxidpigmente zunächst in Suspension mit einer oder mehreren Borverbindungen behandelt. Als Suspensionsmedium wird man im allgemeinen Wasser verwenden, jedoch ist prinzipiell auch der Einsatz wäßrig/organischer oder rein organischer Medien möglich. Die Borverbindungen können zu einem beliebigen Zeitpunkt vor, während oder nach der Herstellung der Pigmentsuspension zugesetzt werden. Die Behandlung kann bei Raumtemperatur oder höherer Temperatur, gegebenenfalls unter Inertatmosphäre, vorgenommen werden. Die Behandlungsdauer beträgt vorzugsweise 1 Minute bis einige Stunden. Das behandelte Pigment wird im zweiten Verfahrensschritt getrocknet. Es hat sich als zweckmäßig erwiesen, die Trocknung so durchzuführen, daß die gesamte Flüssigkeitsmenge der Suspension verdampft wird. Besonders bewährt hat sich hierbei die Sprühtrocknungstechnik. Das behandelte, getrocknete Pigment wird gegebenenfalls wie beim ersten Verfahren gemahlen und gegebenenfalls abschließend bei Temperaturen bis zu 500° C in inerter oder nur geringe Mengen Sauerstoff enthaltender Atmosphäre getempert.

Thermisch stabile Eisen(II)-haltige Eisenoxidpigmente, welche Mischungen verschiedener Eisenoxid-Farbpigmente sind, werden aus Kostengründen zweckmäßigerweise so hergestellt, daß lediglich diejenigen Mischungspartner, welche zweiwertiges Eisen enthalten, nach einem der beiden erfindungsgemäßen Verfahren vor Oxidation geschützt werden und erst dann die Mischung mit den anderen Eisenoxidpigmenten durchgeführt wird. Es ist aber selbstverständlich auch möglich, die Mischung aus Eisen(II)-haltigen Eisenoxid-Farbpigmenten und Eisen(II)-freien Eisenoxid-Farbpigmenten als Ganzes einem der beiden erfindungsgemäßen Verfahren zu unterwerfen.

Die erfindungsgemäßen thermisch stabilen Eisenoxid-Farbpigmente bzw. -pigmentmischungen haben ihre Einsatzgebiete dort, wo anorganische und/oder organische Materialien eingefärbt werden sollen. So dienen sie u. a. zur Farbgebung bei der Herstellung von Kunststoffteilen, von Lacken und von Dispersionsfarben. Bevorzugt werden sie eingesetzt zur Färbung anorganischer Baustoffe, wie z. B. Putzen, Betondachsteinen oder Kalksandsteinen. Die erfindungsgemäßen thermisch stabilen Eisenoxid-Magnetpigmente können zur Fertigung magnetischer Aufzeichnungsmedien jeglicher Art verwendet werden, wie z. B. Audio- und Videobänder, Instrumentationsbänder, Computerbänder, Magnetkarten, flexible Magnetscheiben, starre Magnetplatten, Trommelspeicher.

Die Erfindung wird nachfolgend durch Beispiele näher erläutert, die den Anmeldungsgegenstand jedoch in keiner Weise einschränken. Die spezifischen Oberflächen wurden mittels BET-Stickstoff-Adsorptionsmethode, die wasserlöslichen Anteile nach DIN 53 197 A bestimmt.

## Beispiel 1

7,5 kg eines Eisenoxidschwarz-Farbpigments (Anilinverfahren) wurden nach der Trocknung wie folgt weiterverarbeitet:

a) 1,5 kg der Pigmentcharge wurden 10 Min. in einer Hammermühle gemahlen und eine spezifische Oberfläche von 14,8 $m^2/g$ sowie ein FeO-Gehalt von 24,5 Gew.-% ermittelt. Der Gehalt an Stickstoff betrug 0,15 Gew.-%; die wasserlöslichen Anteile lagen bei 0,55 Gew.-%.
Die Prüfung der thermischen Stabilität erfolgte nach dem oben beschriebenen Test, wobei eine Stabilitätsgrenze des unbehandelten Pigments von 198° C ($\Delta R_x = 1$) erreicht wurde.

b) Weitere 1,5 kg dieser Pigmentcharge wurden in einem Intensivmischer der Firma Eirich unter Zusatz von 1 Gew.-% 3-Amino-1,2,4-Triazol 1 Std. bei ca. 30° C gemischt und entsprechend Beispiel a) gemahlen. Es wurde eine spezifische Oberfläche von 14,1 $m^2/g$ ermittelt. Der analytisch

bestimmte Gehalt an 3-Amino-1,2,4-Triazol lag bei 0,8 Gew.-%; die wasserlöslichen Anteile betrugen 1 Gew.-%.
Die Stabilitätsgrenze des Pigments erhöhte sich auf 208° C ($\Delta R_x = 1$).

c) Weitere 1,5 kg dieser Charge wurden in einem Intensivmischer der Firma Eirich unter Zusatz von 1,75 Gew.-% 3-Amino-1,2,4-Triazol 1 Std. bei ca. 30° C gemischt und entsprechend a) gemahlen. Es wurde eine spezifische Oberfläche von 13,5 $m^2/g$ ermittelt. Der analytisch bestimmte Gehalt an 3-Amino-1,2,4-Triazol lag bei 1,55 Gew.-%; die wasserlöslichen Anteile betrugen 1,4 Gew.-%.
Die Stabilitätsgrenze des Pigments erhöhte sich auf 213° C ($\Delta R_x = 1$).

d) Weitere 1,5 kg dieser Pigmentcharge wurden mit 2,5 Gew.-% 3-Amino-1,2,4-Triazol entsprechend Beispiel a) gemischt und gemahlen. Es wurde eine spezifische Oberfläche von 13,4 $m^2/g$ ermittelt. Der analytisch bestimmte Gehalt an 3-Amino-1,2,4-Triazol lag bei 1,9 Gew.-%; die wasserlöslichen Anteile betrugen 1,7 Gew.-%.
Die Stabilitätsgrenze des Pigments erhöhte sich auf 217° C ($\Delta R_x = 1$).

e) Die letzten 1,5 kg dieser Charge wurden mit 4 Gew.-% 3-Amino-1,2,4-Triazol entsprechend Beispiel a) gemischt und gemahlen. Es wurde eine spezifische Oberfläche von 12,6 $m^2/g$ ermittelt. Der analytisch bestimmte Gehalt an 3-Amino-1,2,4-Triazol lag bei 3,4 Gew.-%; die wasserlöslichen Anteile betrugen 2,8 Gew.-%.
Die Stabilitätsgrenze des Pigments erhöhte sich auf 225° C ($\Delta R_x = 1$).

## Beispiel 2

7,5 kg eines nach dem Anilinverfahren hergestellten Eisenoxidschwarz-Farbpigments (Ausgangscharge wie bei Beispiel 1) wurden nach der Trocknung wie folgt weiterverarbeitet:

a) 1,5 kg der Pigmentcharge wurden 10 Min. in einer Hammermühle gemahlen und eine spezifische Oberfläche von 14,7 $m^2/g$ sowie ein FeO-Gehalt von 24 Gew.-% ermittelt. Der Gehalt an Bor, gerechnet als $B_2O_3$, lag bei weniger als 0,1 Gew.-%, die wasserlöslichen Anteile betrugen 0,50 Gew.-%.
Die Stabilitätsgrenze des unbehandelten Pigments lag nach dem vorn beschriebenen Test bei 199° C ($\Delta R_x = 1$).

b) Weitere 1,5 kg dieser Pigmentcharge wurden in einem Intensivmischer der Firma Eirich unter Zusatz von 0,5 Gew.-% pulverisierter ortho-Borsäure 1 Stunde bei ca. 30° C gemischt und entsprechend Beispiel a) gemahlen. Es wurde eine spezifische Oberfläche von 14,5 $m^2/g$ ermittelt. Der analytisch bestimmte Gehalt an Bor, gerechnet als $B_2O_3$, lag bei 0,25 Gew.-%. Die wasserlöslichen Anteile betrugen 0,6 Gew.-%.
Die Stabilitätsgrenze des Pigments erhöhte sich auf 203° C ($\Delta R_x = 1$).

c) Weitere 1,5 kg dieser Pigmentcharge wurden mit 1,0 Gew.-% pulverisierter ortho-Borsäure wie in Beispiel b) gemischt und gemahlen sowie eine spezifische Oberfläche von 14 $m^2/g$ ermittelt. Der analytisch bestimmte Gehalt an Bor, gerechnet als $B_2O_3$, lag bei 0,55 Gew.-%. Die wasserlöslichen Anteile betrugen 0,7 Gew.-%.
Die Stabilitätsgrenze des Pigments erhöhte sich auf 213° C ($\Delta R_x = 1$).

d) Weitere 1,5 kg dieser Pigmentcharge wurden mit 1,75 Gew.-% pulverisierter ortho-Borsäure entsprechend Beispiel b) gemischt und gemahlen und eine spezifische Oberfläche von 13,8 $m^2/g$ erhalten. Der analytisch bestimmte Gehalt an Bor, gerechnet als $B_2O_3$, lag bei 0,96 Gew.-%. Die wasserlöslichen Anteile betrugen 0,9 Gew.-%.
Die Stabilitätgrenze des Pigments erhöhte sich auf 235° C ($\Delta R_x = 1$).

e) Die letzten 1,5 kg der Pigmentcharge wurden mit 2,5 Gew.-% pulverisierter ortho-Borsäure entsprechend Beispiel b) gemischt und gemahlen und eine spezifische Oberfläche von 13,3 $m^2/g$ ermittelt. Der analytisch bestimmte Gehalt an Bor, gerechnet als $B_2O_3$, lag bei 1,35 Gew.-%. Die wasserlöslichen Anteile betrugen 1,4 Gew.-%.
Die Stabilitätsgrenze des Pigments erhöhte sich auf 255° C ($\Delta R_x = 1$).

## Beispiel 3

4,5 kg eines nach dem Anilinverfahren hergestellten Eisenoxidschwarz-Farbpigments (Ausgangscharge wie bei Beispiel 1) wurden nach der Trocknung wie folgt weiterverarbeitet:

a) 1,5 kg dieser Charge wurden in einem Intensivmischer der Firma Eirich unter Zusatz von 0,5 Gew.-% gepulvertem Dibortrioxid 1 Stunde bei ca. 30° C gemischt und anschließend 10 Min. in einer Hammermühle gemahlen. Es wurde eine spezifische Oberfläche von 14,4 $m^2/g$ ermittelt. Der analytisch bestimmte Gehalt an Bor, gerechnet als $B_2O_3$, lag bei 0,40 Gew.-%. Die wasserlöslichen Anteile betrugen 0,6 Gew.-%.
Die Stabilitätsgrenze des Pigments erhöhte sich auf 204° C ($\Delta R_x = 1$).

b) Weitere 1,5 kg dieser Charge wurden mit 1,0 Gew.-% gepulvertem Dibortrioxid entsprechend Beispiel a) gemischt und gemahlen und eine spezifische Oberfläche von 14 $m^2/g$ erhalten. Der analytisch bestimmte Gehalt an Bor, gerechnet als $B_2O_3$, lag bei 0,92 Gew.-%. Die wasserlöslichen Anteile betrugen 0,7 Gew.-%.
Die Stabilitätsgrenze des Pigments erhöhte sich auf 224° C ($\Delta R_x = 1$).

c) Die letzten 1,5 kg dieser Pigmentcharge wurden mit 1,5 Gew.-% gepulvertem Dibortrioxid entsprechend Beispiel a) gemischt und gemahlen und eine spezifische Oberfläche von 13,6 $m^2/g$ ermittelt. Der analytisch bestimmte Gehalt an Bor, gerechnet als $B_2O_3$, lag bei 1,40 Gew.-%. Die wasserlöslichen Anteile betrugen 1 Gew.-%.
Die Stabilitätsgrenze des Pigments erhöhte sich auf 248° C ($\Delta R_x = 1$).

## Beispiel 4

12 kg eines Eisenoxidschwarz-Farbpigments (Fällungsverfahren) wurden nach der Trocknung wie folgt weiterverarbeitet:

a) 2 kg dieser Pigmentcharge wurden 10 Min. in einer Hammermühle gemahlen und eine spezifische Oberfläche von 18,5 $m^2/g$ sowie ein FeO-Gehalt von 23,0 Gew.-% ermittelt. Die Gehalte an Stickstoff und Bor betrugen weniger als 0,1 Gew.-%. Die wasserlöslichen Anteile lagen bei 0,4 Gew.-%.
Die Stabilitätsgrenze des unbehandelten Pigments lag nach dem vorn beschriebenen Text bei 182° C ($\Delta R_x = 1$).

b) Weitere 2 kg dieser Charge wurden mit 2,5 Gew.-% 3-Amino-1,2,4-Triazol in einem Intensivmischer der Firma Eirich 1 Stunde bei ca. 30° C gemischt und anschließend 10 Min. in einer Hammermühle gemahlen. Es wurde eine spezifische Oberfläche von 17,1 $m^2/g$ ermittelt. Der analytisch bestimmte Gehalt an 3-Amino-1,2,4-Triazol lag bei 2,1 Gew.-%; die wasserlöslichen Anteile betrugen 1,6 Gew.-%.
Die Stabilitätsgrenze des Pigments erhöhte sich auf 203° C ($\Delta R_x = 1$).

c) Weitere 2 kg dieser Charge wurden mit 5 Gew.-% 3-Amino-1,2,4-Triazol entsprechend Beispiel b) gemischt und gemahlen und eine spezifische Oberfläche von 16 $m^2/g$ ermittelt. Der analytisch bestimmte Gehalt an 3-Amino-1,2,4-Triazol lag bei 4,4 Gew.-%; die wasserlöslichen Anteile betrugen 3,5 Gew.-%.
Die Stabilitätsgrenze des Pigments erhöhte sich auf 221° C ($\Delta R_x = 1$).

d) Weitere 2 kg dieser Charge wurden mit 2 Gew.-% pulverisierter ortho-Borsäure entsprechend Beispiel b) gemischt und gemahlen und eine spezifische Oberfläche von 17,8 $m^2/g$ ermittelt. Der analytisch bestimmte Gehalt an Bor, gerechnet als $B_2O_3$, lag bei 1,1 Gew.-%. Die wasserlöslichen Anteile betrugen 1,2 Gew.-%.
Die Stabilitätsgrenze des Pigments erhöhte sich auf 210° C ($\Delta R_x = 1$).

e) Weitere 2 kg dieser Charge wurden mit 3,5 Gew.-% pulverisierter ortho-Borsäure entsprechend Beispiel b) gemischt und gemahlen und eine spezifische Oberfläche von 17,0 $m^2/g$ ermittelt. Der analytisch bestimmte Gehalt an Bor, gerechnet als $B_2O_3$, lag bei 1,9 Gew.-%. Die wasserlöslichen Anteile betrugen 2,1 Gew.-%.
Die Stabilitätsgrenze des Pigments erhöhte sich auf 229° C ($\Delta R_x = 1$).

f) Die letzten 2 kg dieser Charge wurden mit 5 Gew.-% pulverisierter ortho-Borsäure entsprechend Beispiel b) gemischt und gemahlen und eine spezifische Oberfläche von 16,4 $m^2/g$ ermittelt. Der analytisch bestimmte Gehalt an Bor, gerechnet als $B_2O_3$, lag bei 2,75 Gew.-%. Die wasserlöslichen Anteile betrugen 2,9 Gew.-%.
Die Stabilitätsgrenze des Pigments erhöhte sich auf 249° C ($\Delta R_x = 1$).

## Beispiel 5

a) 100 kg Eisenoxidschwarz-Paste nach dem Anilinverfahren (Feststoffanteil ca. 55 Gew.-%) wurden in einem Niro-Sprühtrockner auf eine Restfeuchte von 2 Gew.-% getrocknet. Die Eingangstemperatur betrug 475° C, die Ausgangstemperatur 90° C. Das Produkt wurde anschließend 10 Min. in einer Raymondmühle gemahlen und eine spezifische Oberfläche von 16 $m^2/g$ sowie ein FeO-Gehalt von 27,5 Gew.-% ermittelt. Der Gehalt an Bor, gerechnet als $B_2O_3$, lag unterhalb von 0,1 Gew.-%. Die wasserlöslichen Anteile betrugen 0,55 Gew.-%.
Die Stabilitätsgrenze des unbehandelten Pigments lag nach dem vorn beschriebenen Test bei 195° C ($\Delta R_x = 1$).

b) Weitere 100 kg dieser Eisenoxidschwarz-Paste (Feststoffanteil ca. 55 Gew.-%) wurden mit 1,5 Gew.-% pulverisierter ortho-Borsäure (bezogen auf $Fe_3O_4$) 1 Std. in einem Nautamischer bei RT gemischt, entsprechend Beispiel a) sprühgetrocknet und gemahlen. Es wurde eine spezifische Oberfläche von 15,5 $m^2/g$ ermittelt. Der Gehalt an Bor, gerechnet als $B_2O_3$, lag bei 0,80 Gew.-%. Die wasserlöslichen Anteile betrugen 1,0 Gew.-%.
Die Stabilitätsgrenze des Pigments erhöhte sich auf 223° C ($\Delta R_x = 1$).

c) Weitere 100 kg dieser Eisenoxidschwarz-Paste (Feststoffanteil ca. 55 Gew.-%) wurden mit 3 Gew.-% pulverisierter ortho-Borsäure (bezogen auf $Fe_3O_4$) entsprechend Beispiel b) gemischt, sprühgetrocknet und gemahlen. Es wurde eine spezifische Oberfläche von 14,8 $m^2/g$ ermittelt. Der Gehalt an Bor, gerechnet als $B_2O_3$, lag bei 1,60 Gew.-%; die wasserlöslichen Anteile betrugen 1,5 Gew.-%.
Die Stabilitätsgrenze des Pigments erhöhte sich auf 251° C ($\Delta R_x = 1$).

Beispiel 6

7,5 kg eines auf konventionellem Weg hergestellten nadelförmigen Magnetitpigments (nach EP 3100) für magnetische Signalaufzeichnungen wurden wie folgt verarbeitet:

a) 1,5 kg dieser Charge wurden auf eine Korngröße von ca. 1 mm gebracht und eine spezifische Oberfläche von 24 $m^2/g$ sowie ein FeO-Gehalt von 21,5 Gew.-% ermittelt. Der analytisch bestimmte Gehalt an Bor, gerechnet als $B_2O_3$, lag unterhalb von 0,05 Gew.-%. Die wasserlöslichen Anteile betrugen 0,1 Gew.-%.
Die Stabilitätsgrenze des unbehandelten Pigments lag nach dem vorn beschriebenen Test bei 148° C ($\Delta R_x = 1$).
b) Weitere 1,5 kg dieser Charge wurden mit 1 Gew.-% pulverisierter ortho-Borsäure 1 Stunde bei ca. 30° C in einem Intensivmischer der Firma Eirich gemischt und anschließend wie bei Beispiel a) auf eine Korngröße von 1 mm gebracht. Die spezifische Oberfläche wurde zu 23,4 $m^2/g$ ermittelt. Der analytisch bestimmte Gehalt an Bor, gerechnet als $B_2O_3$, lag bei 0,52 Gew.-%. Die wasserlöslichen Anteile betrugen 0,5 Gew.-%.
Die Stabilitätsgrenze des Pigments erhöhte sich auf 158° C ($\Delta R_x = 1$).
c) Weitere 1,5 kg dieser Charge wurden mit 1,5 Gew.-% pulverisierter ortho-Borsäure entsprechend Beispiel a) gemischt und anschließend auf eine Korngröße von ca. 1 mm gebracht. Die spezifische Oberfläche wurde zu 23 $m^2/g$ ermittelt. Der analytisch bestimmte Gehalt an Bor, gerechnet als $B_2O_3$, lag bei 0,80 Gew.-%. Die wasserlöslichen Anteile betrugen 0,4 Gew.-%.
Die Stabilitätsgrenze des Pigments erhöhte sich auf 173° C ($\Delta R_x = 1$).
d) Weitere 1,5 kg dieser Charge wurden mit 2,0 Gew.-% pulverisierter ortho-Borsäure entsprechend Beispiel b) gemischt und auf eine Korngröße von ca. 1 mm gebracht. Die spezifische Oberfläche wurde zu 22,7 $m^2/g$ ermittelt. Der analytisch bestimmte Gehalt an Bor, gerechnet als $B_2O_3$, lag bei 1,1 Gew.-%. Die wasserlöslichen Anteile betrugen 0,7 Gew.-%.
Die Stabilitätsgrenze des Pigments erhöhte sich auf 199° C ($\Delta R_x = 1$).
e) Die letzten 1,5 kg dieser Charge wurden mit 3 Gew.-% pulverisierter ortho-Borsäure entsprechend Beispiel b) gemischt und auf eine Korngröße von ca. 1 mm gebracht. Die spezifische Oberfläche wurde zu 22 $m^2/g$ ermittelt. Der analytisch bestimmte Gehalt an Bor, gerechnet als $B_2O_3$, lag bei 1,65 Gew.-%. Die wasserlöslichen Anteile betrugen 1,1 Gew.-%.
Die Stabilitätsgrenze des Pigments erhöhte sich auf 224° C ($\Delta R_x = 1$).

Beispiel 7

6 kg des in Beispiel 6 verwendeten Magnetitpigments wurden wie folgt weiterverarbeitet:

a) 1,5 kg dieser Charge wurden mit 0,5 Gew.-% gepulvertem Dibortrioxid 1 Stunde bei ca. 30° C in einem Intensivmischer der Firma Eirich gemischt und anschließend auf eine Korngröße von ca. 1 mm gebracht. Die spezifische Oberfläche wurde zu 23,7 $m^2/g$ ermittelt. Der analytisch bestimmte Gehalt an Bor, gerechnet als $B_2O_3$, lag bei 0,45 Gew.-%. Die wasserlöslichen Anteile betrugen 0,2 Gew.-%.
Die Stabilitätsgrenze des Pigments erhöhte sich auf 156° C ($\Delta R_x = 1$).
b) Weitere 1,5 kg dieser Charge wurden entsprechend Beispiel a) mit 1 Gew.-% pulverisiertem Dibortrioxid gemischt und auf eine Korngröße von 1 mm gebracht. Die spezifische Oberfläche wurde zu 23,3 $m^2/g$ ermittelt. Der analytisch bestimmte Gehalt an Bor, gerechnet als $B_2O_3$, lag bei 0,96 Gew.-%. Die wasserlöslichen Anteile betrugen 0,7 Gew.-%.
Die Stabilitätsgrenze des Pigments erhöhte sich auf 168° C ($\Delta R_x = 1$).
c) Weitere 1,5 kg dieser Charge wurden wie in Beispiel a) beschrieben mit 1,5 Gew.-% pulverisiertem Dibortrioxid gemischt und auf eine Korngröße von ca. 1 mm gebracht. Die spezifische Oberfläche wurde zu 23,1 $m^2/g$ ermittelt. Der analytisch bestimmte Gehalt an Bor, gerechnet als $B_2O_3$, lag bei 1,42 Gew.-%. Die wasserlöslichen Anteile betrugen 1,0 Gew.-%.
Die Stabilitätsgrenze des Pigments erhöhte sich auf 195° C ($\Delta R_x = 1$).
d) Die letzten 1,5 kg wurden entsprechend Beispiel a) mit 2,5 Gew.-% pulverisiertem Dibortrioxid gemischt und auf eine Korngröße von ca. 1 mm gebracht. Die spezifische Oberfläche wurde zu 22,4 $m^2/g$ ermittelt. Der analytisch bestimmte Gehalt an Bor, gerechnet als $B_2O_3$, lag bei 2,40 Gew.-%. Die wasserlöslichen Anteile betrugen 1,4 Gew.-%.
Die Stabilitätsgrenze des Pigments erhöhte sich auf 235° C ($\Delta R_x = 1$).

Tabelle I

| Beispiel | Zusatz | Menge [Gew.-%] | Stabilitätsgrenze [°C] | wasserlösl. Anteile [Gew.-%] | BET-Oberfläche [$m^2/g$] |
|---|---|---|---|---|---|
| 1 a | ohne | | 198 | 0,55 | 14,8 |
| b | 3-Amino-1,2,4-Triazol | 0,8 | 208 | 1,0 | 14,1 |
| c | 3-Amino-1,2,4-Triazol | 1,55 | 213 | 1,4 | 13,5 |
| d | 3-Amino-1,2,4-Triazol | 1,9 | 217 | 1,7 | 13,4 |
| e | 3-Amino-1,2,4-Triazol | 3,4 | 225 | 2,8 | 12,6 |
| 2 b | $H_3BO_3$ | 0,5 | 203 | 0,6 | 14,5 |
| c | $H_3BO_3$ | 1,0 | 213 | 0,7 | 14 |
| d | $H_3BO_3$ | 1,75 | 235 | 0,9 | 13,8 |
| e | $H_3BO_3$ | 2,5 | 255 | 1,4 | 13,3 |
| 3 a | $B_2O_3$ | 0,5 | 204 | 0,6 | 14,4 |
| b | $B_2O_3$ | 1,0 | 224 | 0,7 | 14 |
| c | $B_2O_3$ | 1,5 | 248 | 1,0 | 13,6 |

Bem.: Beispiel 1a ist die Nullprobe zu allen Beispielen 1, 2 und 3.

| Beispiel | Zusatz | Menge [Gew.-%] | Stabilitätsgrenze [°C] | wasserlösl. Anteile [Gew.-%) | BET-Oberfläche [$m^2/g$] |
|---|---|---|---|---|---|
| 4 a | ohne | | 182 | 0,4 | 18,5 |
| b | 3-Amino-1,2,4-Triazol | 2,1 | 203 | 1,6 | 17,1 |
| c | 3-Amino-1,2,4-Triazol | 4,4 | 221 | 3,5 | 16 |
| d | $H_3BO_3$ | 2,0 | 210 | 1,2 | 17,8 |
| e | $H_3BO_3$ | 3,5 | 229 | 2,1 | 17 |
| f | $H_3BO_3$ | 5,0 | 249 | 2,9 | 16,4 |
| 5 a | ohne | | 195 | 0,55 | 16 |
| b | $H_3BO_3$ | 1,5 | 223 | 1,0 | 15,5 |
| c | $H_3BO_3$ | 3,0 | 251 | 1,5 | 14,8 |
| 6 a | ohne | | 148 | 0,1 | 24 |
| b | $H_3BO_3$ | 1,0 | 158 | 0,5 | 23,4 |

Tabelle I (Fortsetzung)

| Beispiel | Zusatz | Menge [Gew.-%] | Stabilitätsgrenze [°C] | wasserlösl. Anteile [Gew.-%) | BET-Oberfläche [$m^2/g$] |
|---|---|---|---|---|---|
| c | $H_3BO_3$ | 1,5 | 173 | 0,4 | 23 |
| d | $H_3BO_3$ | 2,0 | 199 | 0,7 | 22,7 |
| e | $H_3BO_3$ | 3,0 | 224 | 1,1 | 22 |
| 7 a | $B_2O_3$ | 0,5 | 156 | 0,2 | 23,7 |
| b | $B_2O_3$ | 1,0 | 168 | 0,7 | 23,3 |
| c | $B_2O_3$ | 1,5 | 195 | 1,0 | 23,1 |
| d | $B_2O_3$ | 2,5 | 235 | 1,4 | 22,4 |

Bem.: Beispiel 6a ist die Nullprobe zu allen Beispielen 6 und 7.

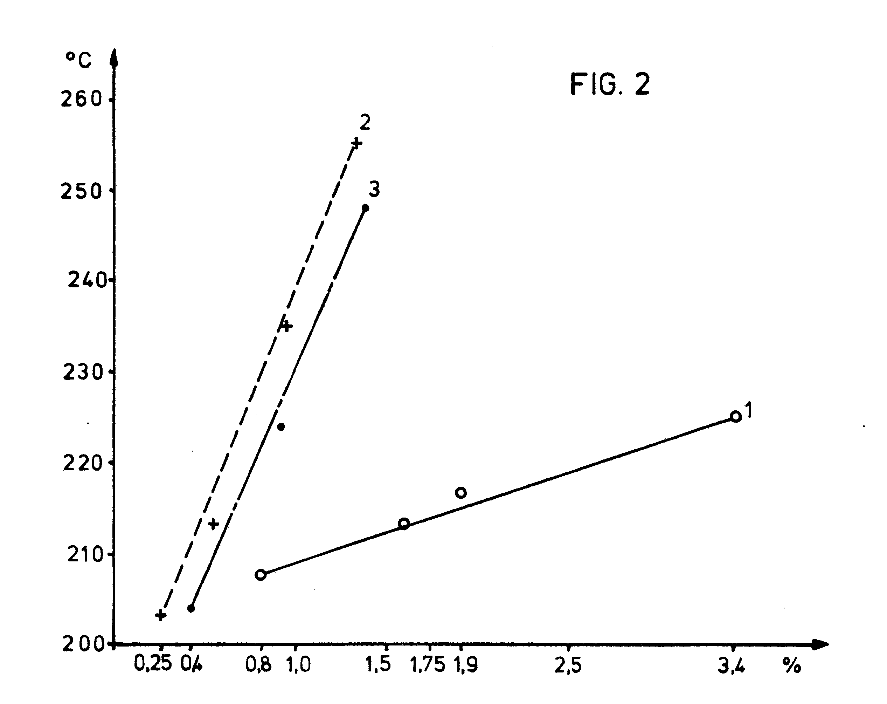

Einige der Werte dieser Tabelle I sind in Fig. 2 graphisch dargestellt.

**Patentansprüche**

1. Eisenoxidpigmente mit einem Eisen(II)-Gehalt von mindestens 5 Gew.-%, gerechnet als FeO, mit einer Beschichtung zur Erhöhung der Stabilität gegenüber Luftoxidation aus mindestens einer borhaltigen Verbindung.

2. Eisenoxidpigmente gemäß Anspruch 1, dadurch gekennzeichnet, daß die Beschichtung aus 0,1 bis 4 Gew.-% Bor, gerechnet als $B_2O_3$, in Form von Borsauerstoffverbindungen besteht.

3. Eisenoxidpigmente gemäß Anspruch 1 oder 2, dadurch gekennzeichnet, daß es sich um Eisenoxidschwarz- und/oder Eisenoxidbraun-Farbpigmente handelt.

4. Eisenoxidpigmente gemäß Anspruch 1 oder 2, dadurch gekennzeichnet, daß es sich um Magnetit oder Mischphasen von Magnetit mit Maghämit (Berthollide-Eisenoxide) und/oder Ferriten handelt.

5. Eisenoxidpigmente gemäß Anspruch 1, 2 oder 4, dadurch gekennzeichnet, daß es sich um mit magnetischen Metalloxiden umhüllte Magnetite bzw. Eisenoxide mit einem Oxidationszustand zwischen Magnetit und Maghämit handelt.

6. Verfahren zur Herstellung der Eisenoxidpigmente gemäß den Ansprüchen 1 bis 5, dadurch gekennzeichnet, daß in bekannter Weise hergestellte Eisenoxidpigmente mit mindestens einer Borverbindung gemischt werden, die Mischung gegebenenfalls gemahlen und gegebenenfalls anschließend getempert wird.

7. Verfahren zur Herstellung der Eisenoxidpigmente gemäß den Ansprüchen 1 bis 5, dadurch gekennzeichnet, daß in bekannter Weise hergestellte Eisenoxidpigmente in Suspension mit mindestens einer Borverbindung behandelt, getrocknet, gegebenenfalls gemahlen und gegebenenfalls anschließend getempert werden.

8. Verfahren zur Herstellung der Eisenoxidpigmente gemäß den Ansprüchen 6 und 7, dadurch gekennzeichnet, daß als Borverbindungen Boroxide, Borsäuren und/oder Salze von Borsäuren eingesetzt werden.

9. Verwendung der Eisenoxidpigmente gemäß den Ansprüchen 1 bis 3 zur Einfärbung anorganischer und/oder organischer Materialien.

10. Verwendung der thermisch stabilen Eisenoxidpigmente gemäß den Ansprüchen 1 und 4 bis 5 zur Herstellung magnetischer Aufzeichnungsmedien.

**Claims**

1. Iron oxide pigments having a content of iron(II) of at least 5% by weight, calculated as FeO, and having a coating to increase the stability towards atmospheric oxidation, which coating consists of at least one boron-containing compound.

2. Iron oxide pigments according to Claim 1, characterised in that the coating consists of 0.1 to 4%

by weight of boron, calculated as $B_2O_3$, in the form of boron-oxygen compounds.

3. Iron oxide pigments according to Claim 1 or 2, characterised in that these are black iron oxide and/or brown iron oxide colouring pigments.

4. Iron oxide pigments according to Claim 1 or 2, characterised in that these are magnetite or mixed phases of magnetite and maghemite (berthollide iron oxides) and/or ferrites.

5. Iron oxide pigments according to Claim 1, 2 or 4, characterised in that these are magnetites or iron oxides with an oxidation state between magnetite and maghemite, which are coated with magnetic metal oxides.

6. Process for the production of the iron oxide pigments according to Claims 1 to 5, characterised in that iron oxide pigments which have been produced in a known manner are mixed with at least one boron compound and the mixture is optionally ground and then optionally tempered.

7. Process for the production of the iron oxide pigments according to Claims 1 to 5, characterised in that iron oxide pigments produced in a known manner are treated, in suspension, with at least one boron compound, dried, optionally ground and then optionally tempered.

8. Process for the production of the iron oxide pigments according to Claims 6 an 7, characterised in that boron oxides, boric acids and/or salts or boric acids are used as the boron compounds.

9. Use of the iron oxide pigments according to Claims 1 to 3 for dyeing inorganic and/or organic materials.

10. Use of the thermally stable iron oxide pigments according to Claims 1 and 4 to 5 for the production of magnetic recording media.

**Revendications**

1. Oxydes de fer pigmentaires contenant au moins 5% en poids de Fe-II, exprimé en FeO, portant un revêtement consistant en au moins un composé contenant du bore qui accroît la stabilité contre l'oxydation par l'air.

2. Oxydes de fer pigmentaires selon la revendication 1, caractérisés en ce que le revêtement consiste en 0,1 à 4% en poids de bore, exprimé en $B_2O_3$, à l'état de composés oxygénés du bore.

3. Oxydes de fer pigmentaires selon la revendication 1 ou 2, caractérisés en ce qu'ils consistent en oxydes de fer pigmentaires noirs et/ou oxydes de fer pigmentaires bruns.

4. Oxydes de fer pigmentaires selon la revendication 1 ou 2, caractérisés en ce qu'ils consistent en magnétite ou phases mixtes de magnétite et de maghémite (oxydes de fer du type berthollides) et/ou ferrites.

5. Oxydes de fer pigmentaires selon la revendication 1, 2 ou 4, caractérisés en ce qu'ils consistent en magnétites ou oxydes de fer à un stade d'oxydation intermédiaire entre la magnétite et la maghémite, enrobés par des oxydes métalliques magnétiques.

6. Procédé de préparation des oxydes de fer pigmentaires selon les revendications 1 à 5, caractérisé en ce que l'on mélange les oxydes de fer pigmentaires préparés de manière connue en soi avec au moins un composé du bore, on broie éventuellement le mélange et on le soumet ensuite éventuellement à un traitement thermique.

7. Procédé de préparation des oxydes de fer pigmentaires selon les revendications 1 à 5, caractérisé en ce que l'on traite les oxydes de fer pigmentaires, préparés de manière connue en soi, en suspension par au moins un composé du bore, on sèche, on broie éventuellement et, le cas échéant, on soumet ensuite à un traitement thermique.

8. Procédé de préparation des oxydes de fer pigmentaires selon les revendications 6 et 7, caractérisé en ce que l'on utilise en tant que composés du bore des oxydes de bore, des acides boriques et/ou des sels d'acides boriques.

9. Utilisation des oxydes de fer pigmentaires selon les revendications 1 à 3 pour la coloration de matières minérales et/ou organiques.

10. Utilisation des oxydes de fer pigmentaires stables à la chaleur selon les revendications 1 et 4 à 5 pour la préparation de milieux d'enregistrements magnétiques.

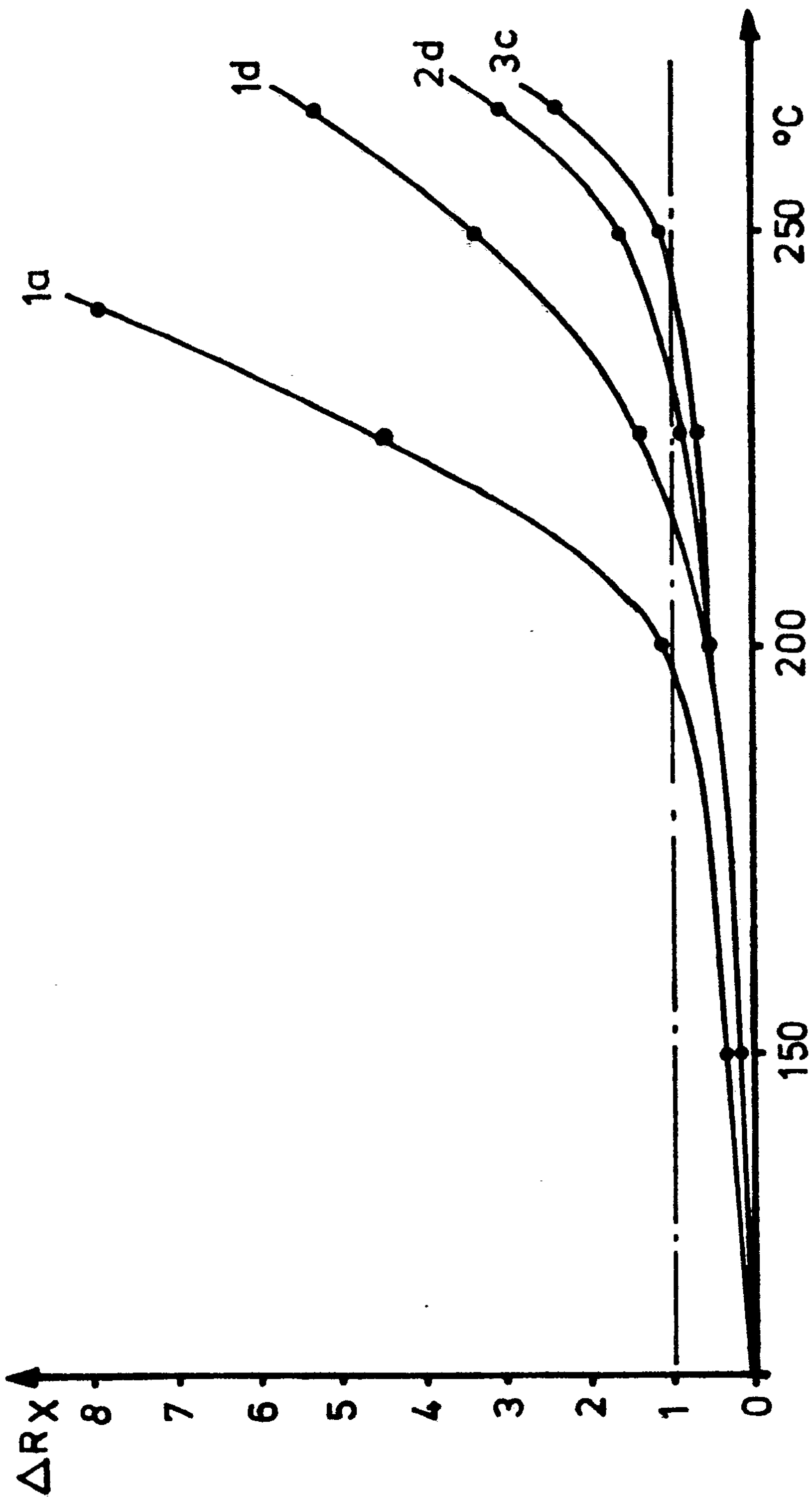


FIG.1

FIG. 2